# EUROPÄISCHE PATENTANMELDUNG

(11) **EP 1 788 282 A2**
(43) Veröffentlichungstag der Anmeldung: **23.05.2007**
(21) Anmeldenummer: 06019663.1
(22) Anmeldetag: 20.09.2006
(51) Int. Cl.: F16H 7/08

(54) **Spannanordnung**

(30) Priorität: 17.11.2005 DE 102005056506
(71) Anmelder: Weber Technology AG, 8700 Küsnacht (CH)
(72) Erfinder: Jenni, Hans-Rudolf, 3365 Grasswill (CH); Grebert, Joerg, 56235 Ransbach-Baumbach (DE)
(74) Vertreter: Hössle Kudlek & Partner

(57) **Zusammenfassung**

Die erfindungsgemäße Spannanordnung ist zum Spannen einer Kette (6) in einem Steuertrieb (2) ausgebildet und weist mindestens eine Spannschiene (10) sowie mindestens eine weitere Gleitschiene (8) auf, wobei die mindestens eine weitere Gleitschiene (8) dazu ausgebildet ist, sich in Abhängigkeit der Temperatur derart zu verformen, dass sie einer thermisch bedingten Toleranz in dem Steuertrieb (2) entgegenwirkt.

## Beschreibung

Die Erfindung betrifft eine Spannanordnung, einen Steuertrieb, eine Gleitschiene und einen Motor.

Motoren oder Verbrennungskraftmaschinen sind über ihr Einsatzspektrum ausgehend von einem Kaltstart bis zu oberhalb einer Auslegungstemperatur bei hoher Last, insbesondere bei unzureichender Kühlung, hohen Temperaturunterschieden ausgesetzt. Derartige Temperaturunterschiede führen in Bauteilen des Motors zu Wärmedehnungen. Hiervon ist insbesondere ein zum Antrieb von Nockenwellen des Motors vorgesehener Steuertrieb betroffen, wobei der Steuertrieb ein Antriebsglied hat, das an Wellen des Motors angeordnete Räder umschlingt. Da der Steuertrieb üblicherweise eine große Längenausdehnung hat, können innerhalb des Steuertriebs unter einem Einfluss sich verändernder Temperaturen entsprechend große Längendifferenzen auftreten.

Vor diesem Hintergrund wird eine Spannanordnung mit den Merkmalen des Patentanspruchs 1, ein Steuertrieb mit dem Merkmalen des Patentanspruchs 6, ein Motor mit dem Merkmalen des Patentanspruchs 8 und eine Gleitschiene mit den Merkmalen des Patentanspruchs 12 vorgestellt.

Die erfindungsgemäße Spannanordnung ist zum Spannen einer Kette in einem Steuertrieb ausgebildet und weist mindestens eine Spannschiene sowie mindestens eine weitere Gleitschiene auf, wobei die mindestens eine weitere Gleitschiene dazu ausgebildet ist, sich in Abhängigkeit der Temperatur derart zu verformen, dass sie einer thermisch bedingten Toleranz in dem Steuertrieb entgegenwirkt.

Die mindestens eine Spannschiene der Spannanordnung ist üblicherweise zum Ausgleich von Toleranzen in dem Steuertrieb ausgebildet, sie kann mit einem Spannelement zusammenwirken. Die mindestens eine weitere Gleitschiene ist dazu ausgebildet, die mindestens eine Spannschiene zu unterstützen. Hierbei kann die mindestens eine weitere Gleitschiene wie eine nachfolgend beschriebene erfindungsgemäße Gleitschiene ausgebildet sein.

Zweck der Spannschiene, die typischerweise mit einem Spannelement zusammenwirkt, ist der Ausgleich von Toleranzen, bspw. Temperatur- und/oder Verschleißdehnungen in dem Steuertrieb bzw. einem Kettentrieb. Derartige Toleranzen sind bspw. durch ein Zusammenwirken der Kette mit dem Motor bedingt und machen sich insbesondere dann bemerkbar, wenn die Kette und der Motor aus verschiedenen Materialien gefertigt sind.

Je weiter in dem Motor zu verbindenden Wellen und somit Räder, die mit der Kette zusammenwirken, auseinanderliegen und je länger somit die Kette ist, desto größer ist ein Bedarf an Geometrieänderungen durch die Spannanordnung. Die mindestens eine mit dem Spannelement zusammenwirkende Spannschiene muss derart ausgebildet sein, dass durch sie ein entsprechend großer Verstellweg, entlang dem die Kette auszulenken ist, bereitgestellt wird. In diesem Fall ist ein Platzbedarf der Spannschiene und des Spannelements größer, was bei kompakten Motoren, in denen die mindestens eine Spannschiene mit dem Spannelement anzuordnen ist, zu erheblichen Bauraumproblemen führen kann.

Infolgedessen ist in dem Steuertrieb als zusätzliche Komponente der Spannanordnung die mindestens eine weitere Gleitschiene vorgesehen. Diese unterstützt aufgrund ihrer eigenen Wärmedehnung die Funktion mindestens eines Verstellelements, das die mindestens eine Spannschiene und das Spannelement umfasst und reduziert somit den Bedarf an einer Geometrieänderung. Somit kann auf relativ kleine, handelsübliche Spannschienen und Spannelemente zurückgegriffen werden, die sich in dem Steuertrieb bzw. dem Motor gut unterbringen lassen.

Die mindestens eine weitere Spannschiene ist vorzugsweise einstückig ausgebildet oder besteht lediglich aus einem Modul. Sie kann in dem Streuertrieb fest angeordnet sein, so dass sie im Unterschied zu der mindestens einen Spannschiene keine Relativbewegungen ausführt. Die mindestens eine Gleitschiene kompensiert in Ausgestaltung lediglich einen Teil der innerhalb des Steuertriebs auftretenden Toleranzen.

Der erfindungsgemäße Steuertrieb wirkt mit einem Motor zusammen und weist eine Kette eine Anzahl Räder sowie die erfindungsgemäße Spannanordnung auf.

Es ist vorgesehen, dass Räder des Steuertriebs an Wellen des Motors befestigt sind, die größtenteils in einem Gehäuse des Motors angeordnet sind. Die Kette oder jedes andere geeignete Antriebsglied, bspw. ein Riemen oder Keilriemen, ist insbesondere aus Stahl gebildet und wirkt mit den Rädern und somit den Wellen des Motors zusammen. Vorzugsweise umschlingt die Kette mindestens zwei dieser Räder, so dass über die Kette zwischen den Rädern und somit den Wellen Kräfte und/oder Drehbewegungen übertragbar sind.

Der erfindungsgemäße Motor weist ein Gehäuse und eine Anzahl Wellen auf. Dabei sind die Wellen zumindest teilweise in dem Gehäuse angeordnet. Außerdem weist der Motor eine Kette auf, die mit mindestens zwei der Wellen zusammenwirkt. Dieser Motor weist außerdem die erfindungsgemäße Spannanordnung auf.

Mindestens eine der Wellen des Motors kann zum Antreiben einer Nockenwelle ausgebildet sein. Es ist vorgesehen, dass das Gehäuse des Motors weitgehend aus Aluminium gebildet ist, wohingegen die Kette oder ein anderes geeignetes Antriebsglied weitgehend aus Stahl gebildet ist. Der Motor weist mindestens zwei an Wellen angeordnete Räder auf. An einem Gehäuse des Motors ist mindestens eine nachfolgend beschriebene erfindungsgemäße Gleitschiene befestigt.

Die erfindungsgemäße Gleitschiene für einen Steuertrieb eines Motors ist dazu ausgebildet, sich in Abhängigkeit der Temperatur derart zu verformen, dass sie einer thermisch bedingten Toleranz in dem Steuertrieb entgegenwirkt.

Diese Gleitschiene ist relativ zu dem Steuertrieb fest zu montieren und aufgrund ihrer Ausbildung unter Temperatureinfluss derart selbstverformend, dass sie der thermisch bedingten Toleranz, insbesondere einer Längedifferenz, die sich aufgrund unterschiedlicher materieller und/oder thermischer Eigenschaften des Motors und einer Kette des in Steuertriebs ergeben kann, entgegenwirkt.

Die erfindungsgemäße Gleitschiene für den Steuertrieb kann eine Gleitfläche aufweisen und ist regelmäßig über mindestens einen Befestigungspunkt derart an einem Motor zu befestigen, dass die Kette des Motors zwischen der Gleitfläche und dem mindestens einen Befestigungspunkt angeordnet ist, so dass das Antriebsglied beaufschlagt durch die Gleitfläche in Abhängigkeit der Temperatur zu spannen ist.

Die Gleitschiene kann allgemein auch zum Auslenken eines anderen Antriebsglieds als einer Kette, bspw. zum Auslenken eines Riemens oder Keilriemens, ausgebildet sein.

Die Gleitschiene ist über den mindestens einen Befestigungspunkt an einem Gehäuse des Motors zu befestigen. Dieser Motor oder eine entsprechende Verbrennungskraftmaschine weist eine Anzahl zumindest teilweise in dem Gehäuse angeordneter Wellen auf. Der Steuertrieb weist eine Anzahl an den Wellen angeordneter Räder oder Umlenkräder auf, Mittelpunkte der Räder sind an den Wellen angeordnet, wobei die Kette mit diesen Rädern zusammenwirkt. Dies kann bedeuten, dass die Kette die Räder umschlingt, so dass zwischen einzelnen Rädern und somit zwischen einzelnen Wellen des Motors Drehbewegungen und/oder Kräfte übertragen werden können.

Des weiteren ist vorzugsweise vorgesehen, dass die Kette aus Stahl oder einer metallischen Legierung, die größtenteils Eisen aufweist, ausgebildet ist. Das Gehäuse des Motors ist dagegen üblicherweise aus Aluminium, bspw. Aluminiumguss oder einer entsprechenden größtenteils Aluminium aufweisenden metallischen Verbindung oder Legierung, ausgebildet.

Da das Gehäuse zur Aufnahme der Wellen und die Kette, die über die Räder mit den Wellen zusammenwirkt, aus unterschiedlichen metallischen Materialien mit unterschiedlichen Wärmeausdehnungskoeffizienten ausgebildet sind, ergibt sich bei Betrieb des Motors, dass in dem Steuertrieb thermisch bedingte Längsdifferenzen auftreten, die durch eine Ausdehnung der Kette und durch sich thermisch unterschiedlich verändernde Abstände zwischen den Wellen in dem Gehäuse und somit zwischen den von der Kette umschlungenen Rädern bedingt sind.

Bei einer bevorzugten Ausbildung der Kette aus Stahl einerseits und des Gehäuses des Motors aus Aluminium andererseits ergibt sich bei Betrieb des Motors, dass sich das Gehäuse mit zunehmender Temperatur stärker ausdehnt als die Kette. Dies hat zur Folge, dass sich die Kette innerhalb des Steuertriebs relativ zu einem Abstand zwischen einzelnen Rädern des Steuertriebs scheinbar verkürzt. Ein Material für die Gleitschiene und insbesondere für das Teilstück der Gleitschiene ist unter Berücksichtigung der unterschiedlichen Ausdehnungskoeffizienten, aus denen die Kette sowie das Gehäuse des Motors gebildet sind, zu wählen.

Die erfindungsgemäße Gleitschiene, die auch als sog. Kettenschiene bezeichnet wird, ist über den mindestens einen Befestigungspunkt an dem Motor fest zu montieren. Aufgrund ihrer Geometrie, Materialeigenschaft, Wärmedehnung und/oder einer Position, an der die Gleitschiene innerhalb des Steuertriebs sowie am Motor angeordnet ist, kann sich die Gleitschiene bei ändernder Temperatur derart verformen, dass die Gleitschiene einer thermisch bedingten Längendifferenz innerhalb des Steuertriebs entgegenwirkt.

Bei der Gleitschiene sind die Gleitfläche oder jedes andere die Kette beaufschlagende Wirkelement und der mindestens eine Befestigungspunkt über ein sich bei Temperaturzunahme ausdehnendes Teilstück oder einen entsprechenden Körper der Gleitschiene miteinander verbunden, das bzw. der sich somit zwischen der Gleitfläche und dem mindestens einen Befestigungspunkt erstreckt. Dies hat zur Folge, dass sich ein Abstand zwischen dem Wirkelement und dem mindestens einen Befestigungspunkt bei zunehmender Temperatur vergrößert und bei abnehmender Temperatur verringert. Da die Kette zwischen der Gleitfläche und dem mindestens einen Befestigungspunkt angeordnet ist, wird die Kette durch die Gleitschiene um einen von der Temperatur T abhängigen Verstellweg s ausgelenkt oder gespannt, wobei ein Wert für den Verstellweg s zumindest in einem bei Betrieb des Motors herrschenden Temperaturbereich zwischen einem Kaltstart und höchsten Drehzahlen bei steigender Temperatur abnimmt und bei abnehmender Temperatur zunimmt. Eine Auslenkung der Kette um den Verstellweg s bedeutet, dass eine Spur, entlang der die Kette in dem Steuertrieb verläuft, um eine dem Verstellweg s entsprechende Strecke ausgelenkt wird.

Die Gleitfläche kann gewölbt sein. Ein zu der Gleitfläche alternatives Wirkelement kann als eine die Kette beaufschlagende Rolle ausgebildet sein, in diesem Fall ist eine Achse zur Aufnahme der Rolle als Komponente des Teilstücks oder über das Teilstück mit dem mindestens einen Befestigungspunkt verbunden. Es ist vorgesehen, dass die Kette entlang der Gleitfläche gleitet. Die Gleitfläche kann eine geeignete Beschichtung aufweisen, so dass zwischen der Gleitfläche und der Kette bei Betrieb des Motors nur eine geringe Reibung erzeugt wird.

Die Gleitschiene ist vorzugsweise weitgehend einstückig ausgebildet, so dass das Teilstück und die Wirkfläche eine Einheit bilden. Aufgrund der einstückigen Ausbildung führt die befestigte Gleitschiene in dem Steuertrieb relativ zu der Kette keine Relativ- bzw. Schwenkbewegung aus, wie dies bei Spannschienen, die durch Spannelemente verschwenkt werden, der Fall ist. Die Gleitschiene ist dazu ausgebildet, sich thermisch zu verformen, wobei sich die Gleitfläche relativ zu dem mindestens einen Befestigungspunkt bewegt.

Mindestens ein Befestigungsmittel der Gleitschiene, das dem mindestens einen Befestigungspunkt zuzuordnen ist, kann als eine Komponente des Teilstücks ausgebildet sein. Das mindestens eine Befestigungsmittel ist bspw. als Öffnung ausgebildet, somit ist die Gleitschiene über mindestens ein Befestigungselement, bspw. eine Schraube oder ein Bolzen, das diese Öffnung durchgreift, an dem mindestens einen Befestigungspunkt zu befestigen.

Die Gleitschiene ist regelmäßig derart an dem Motor zu befestigen, dass der mindestens eine Befestigungspunkt vorzugsweise auf einer konvexen Seite der Kette angeordnet ist. Eine Beaufschlagung oder ein Spannen der Kette durch die Gleitfläche kann in einer zu dem mindestens einen Befestigungspunkt orientieren Richtung erfolgen.

Die Gleitschiene kann derart an dem Motor befestigt sein, dass eine Beaufschlagung der Kette entlang der Spur der Kette zwischen zwei sich gleichsinnig um ihre Wellen drehenden Rädern erfolgt. Außerdem kann die Gleitschiene derart an dem Motor befestigt sein, dass ein die Kette beaufschlagender Bereich der Gleitfläche ins Innere einer Fläche, die von der Kette umschlossen ist, orientiert ist, so dass die Gleitfläche die Kette nach innen spannen kann. Eine alternative Anordnung, bei der die Gleitfläche die Kette nach außen spannt, ist ebenfalls möglich, auch bei dieser Anordnung wird die Kette bei zunehmender Temperatur durch die Gleitschiene weniger stark gespannt.

Bei der Kette oder einer Steuerkette kann zudem eine verschleißbedingte Dehnung auftreten. Die hierdurch zusätzlich im Steuertrieb auftretenden Längsdifferenzen können über die Spannschiene ausgeglichen werden. Die temperaturbedingten Längsdifferenzen können durch die Gleitschiene derart kompensiert werden, dass in allen Betriebssituationen des Motors oder Steuertriebs auch nach längerer Betriebszeit eine korrekte Vorspannung der Kette gegeben ist.

Es ist vorgesehen, dass die Gleitschiene aufgrund ihrer eigenen Wärmedehnung eine Funktion eines herkömmlichen Verstellelements, das eine Spannschiene, die mit einem Spannelement zusammenwirkt, umfasst, unterstützt bzw. einen Bedarf einer durch dieses Verstellelement bereitzustellenden Auslenkung der Kette reduziert. Somit kann auf relativ kleine, handelsübliche Spannschienen und Spannelemente zurückgegriffen werden, die sich in Steuertrieben gut unterbringen lassen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

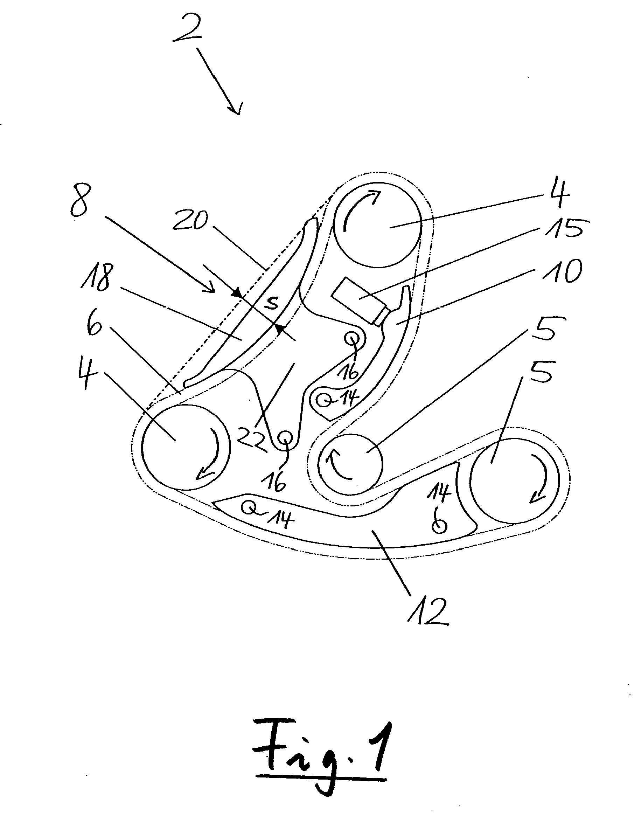

- Figur 1: zeigt in schematischer Darstellung eine bevorzugte Ausführungsform eines Steuertriebs.

Der in Figur 1 in bevorzugter Ausführungsform schematisch dargestellte Steuertrieb 2 weist vier sich bei Betrieb im Uhrzeigersinn drehende Räder 4, 5 auf. Diese Räder 4, 5 sind an Wellen eines hier nicht weiter dargestellten Motors befestigt, wobei die Wellen in einem Gehäuse des Motors drehbar angeordnet sind. Mit den Rädern 4, 5 wirkt ein als Kette 6 ausgebildetes Antriebsglied zusammen.

Da aufgrund von Temperatureinflüssen des Motors in dem Steuertrieb 2 Längendifferenzen auftreten und da die Kette 6 während ihrer Lebensdauer zusätzlich einer verschleißbedingten Dehnung unterworfen ist, weist der Steuertrieb 2 eine Spannschiene 10 sowie eine weitere Gleitschiene 8 und eine Führungsschiene 12 auf. Die Spannschiene 10 bewirkt eine seitliche Auslenkung der Kette 6, wodurch eine sich variierende Länge der Kette 6 und somit eine dadurch auftretende Dehnung innerhalb des Steuertriebs 2 kompensiert wird. Die Spannschiene 10 und die Führungsschiene 12 sind über Befestigungspunkte 14 an dem Motor befestigt. Die Spannschiene 10 wirkt mit einem hydraulischen Spannelement 15 zusammen, über das eine Beaufschlagung der Kette 6 durch die Spannschiene 10 zu regulieren ist. Alternativ kann die Spannschiene 10 statt mit dem hydraulischen Spannelement 15 mit einer Feder zusammenwirken.

Die in der Figur 1 gezeigte Spannschiene 10 mit dem Spannelement 15 sowie die Führungsschiene 12 kommen auch in herkömmlichen Steuertrieben zum Einsatz, um somit Antriebsglieder in geeigneter Weise zu spannen und deren Laufeigenschaften zu verbessern.

Die in dem vorliegenden Steuerbetrieb 2 des weiteren vorgesehene Gleitschiene 8 ist über Befestigungspunkte 16 an dem Motor montiert. Eine gewölbte Gleitfläche 18 dient hier als Wirkelement der Gleitschiene 8. Diese gewölbte Gleitfläche 18 ist dazu ausgebildet, die Kette 6 in Richtung einer von der Kette 6 umschlossenen Fläche zu beaufschlagen. Die Kette 6 ist zwischen der gewölbten Gleitfläche 18 und den beiden Befestigungspunkten 16 der Gleitschiene 8 angeordnet, somit befinden sich die beiden Befestigungspunkte 16 auf einer konvexen Seite der Kette 6.

Erwärmt sich der Motor bei Betrieb, so vergrößern sich durch eine Wärmedehnung Achsabstände zwischen den in Bauteilen des Gehäuses des Motors gelagerten Wellen und somit auch Abstände zwischen den von der Kette 6 umschlungenen Rädern 4, 5.

Die Kette 6 dehnt sich mit zunehmender Temperatur ebenfalls aus. Da die Kette jedoch aus Stahl besteht und das Gehäuse bzw. Bauteile des Gehäuses aus Aluminium gebildet sind, ist die Wärmeausdehnung des Gehäuses in Abhängigkeit der Temperatur etwa doppelt so groß wie die Wärmeausdehnung der Kette 6. Somit vergrößert sich ein Abstand zwischen den Rädern 4, 5 verhältnismäßig stärker als die Ausdehnung der Kette 6. Die bedeutet, dass sich die Kette 6 innerhalb des Steuertriebs 2 zu verkürzen scheint.

Bei Steuertrieben nach dem Stand der Technik werden derartige unterschiedliche Wärmeausdehnungen durch eine verringerte Auslenkung eines durch bewegliche Spannvorrichtungen, die der in der Figur 1 gezeigten Spannschiene 10 mit dem Spannelement 15 ähnlich sind, ausgeglichen.

Ein Problem bei herkömmlichen Steuertrieben gemäß dem Stand der Technik besteht darin, auch bei beengten Platzverhältnissen geeignete Kräfteverhältnisse über eine Strecke, um die das Antriebsglied zu spannen ist, sicherzustellen.

Die in Figur 1 in bevorzugter Ausführungsform gezeigte Gleitschiene 8, die als weitere Komponente in dem Steuertrieb 2 fest angeordnet ist, ist derart ausgebildet, dass diese zur Bereitstellung einer temperaturabhängigen Beaufschlagung der Kette 6 durch das Wirkelement im Vergleich zu bekannten Verstellelementen, die Spannschienen 10 und zusätzliche Spannelemente 15 aufweisen, deutlich weniger Platz benötigt. Hierzu ist die Gleitschiene 8 derart ausgebildet, dass ihre Wärmedehnung zu einer Verformung führt, die thermisch bedingten Toleranzen oder Längendifferenzen im Steuertrieb 2 entgegenwirkt.

Diese über die Befestigungspunkte 16 fest montierte Gleitschiene 8 ist aufgrund ihrer Geometrie und ihrer Materialeigenschaften derart ausgebildet, dass sie die Kette 6 bei niedrigen Temperaturen stärker aus einer Spur 20, entlang der die Kette 6 verläuft, als bei hohen Temperaturen auslenkt. Somit ruft die Gleitschiene 8 bei einer Temperaturänderung eine Längenänderung der Kette 6 relativ zu der Spur 20 hervor, die einer üblichen scheinbaren Verkürzung der Kette 6 bei Erwärmung entgegenwirkt. Die Kette 6 wird dabei durch die Gleitschiene 8 um einen Verstellweg s ausgelenkt.

Durch die Gleitschiene 8 reduziert sich außerdem eine Längendifferenz, die durch die Spannschiene 10 mit dem Spannelement 15 an der Kette 6 ausgeglichen werden muss. Somit kann auch das Spannelement 15 für die Spannschiene 10 kleiner und raumsparender als üblich ausgeführt werden. Die Gleitschiene 8 kann somit konventionelle Spannvorrichtungen, die üblicherweise zum Ausgleich temperaturbedingter Toleranzen in Steuertrieben 2 vorgesehen sind, unterstützen.

Die Befestigungspunkte 16 der Gleitschiene 8 an dem Gehäuse des Motors liegen weit quer ab von der Spur 20 auf der konvexen Seite der Kette 6 sowie einer konvexen Seite der gewölbten Gleitfläche 18. Erwärmt sich die Gleitschiene 8 mit dem Motor, so führt eine Dehnung eines Teilstücks 22 der Gleitschiene 8 zwischen den Befestigungspunkten 16 und der Kettenspur 20 dazu, dass sich die gewölbte Gleitfläche 18 von den Befestigungspunkten 16 um den Verstellweg s wegbewegt und somit eine Auslenkung der Kette 6 aus der Spur 20 verringert. Somit verringert sich auch eine benötigte Länge der Kette 6 zwischen den beiden Rädern 4, was der scheinbaren Kürzung der Kette 6 aufgrund thermischer Einflüsse entgegenwirkt.

Je weiter die im Motor über die Kette 6 bewegbar zu verbindenden Wellen auseinanderliegen und je länger die Kette 6 ist, umso größer ist der Bedarf an ausgleichenden Geometrieänderungen durch die Spannschienen 10 und das Spannelement 15. Je größer eine auszugleichende Längsdifferenz ist, umso größer ist auch ein Platzbedarf für die Spannschienen 10 und das Spannelement 15. Dies kann jedoch gerade bei kompakten Motoren zu Bauraumproblemen führen. Durch eine eigene Wärmedehnung des Teilstücks 22 der Gleitschiene 8 sowie der Gleitschiene 8 insgesamt wird eine Funktion der Spannschiene 10 und des Spannelements 15 in Figur 1 unterstützt und ein Bedarf an Geometrieänderung reduziert. Somit kann auf ein relativ kleines, handelsübliches Spannelement 15 zurückgegriffen werden, das in dem Steuertrieb 2 einfach unterzubringen ist.

## Patentansprüche

1. Spannanordnung, die zum Spannen einer Kette (6) in einem Steuertrieb (2) ausgebildet ist und mindestens eine Spannschiene (10) sowie mindestens eine weitere Gleitschiene (8) aufweist, wobei die mindestens eine weitere Gleitschiene (8) dazu ausgebildet ist, sich in Abhängigkeit der Temperatur derart zu verformen, dass sie einer thermisch bedingten Toleranz in dem Steuertrieb (2) entgegenwirkt.

2. Spannanordnung nach Anspruch 1, bei der die mindestens eine Spannschiene (10) zum Ausgleich von Toleranzen in dem Steuertrieb (2) ausgebildet ist.

3. Spannanordnung nach Anspruch 1 oder 2, bei der die mindestens eine Spannschiene (10) mit einem Spannelement (15) zusammenwirkt.

4. Spannanordnung nach einem der voranstehenden Ansprüche, bei der die mindestens eine weitere Gleitschiene (8) dazu ausgebildet ist, die mindestens eine Spannschiene (10) zu unterstützen.

5. Spannanordnung nach einem der voranstehenden Ansprüche, bei der die mindestens eine weitere Gleitschiene (8) wie eine Gleitschiene (8) nach einem der Ansprüche 12 bis 21 ausgebildet ist.

6. Steuertrieb, der mit einem Motor zusammenwirkt, und der eine Kette (6), eine Anzahl Räder (4, 5) sowie eine Spannanordnung nach einem der Ansprüche 1 bis 5 aufweist.

7. Steuertrieb nach Anspruch 6, bei dem die Kette (6) die Räder (4, 5) umschlingt.

8. Motor mit einem Gehäuse und einer Anzahl Wellen, wobei diese Wellen zumindest teilweise in dem Gehäuse angeordnet sind, der eine mit mindestens zwei der Wellen zusammenwirkende Kette (6) und mindestens eine Spannanordnung nach einem der Ansprüche 1 bis 5 aufweist.

9. Motor nach Anspruch 8, bei dem mindestens eine der Wellen eine Nockenwelle antreibt.

10. Motor nach Anspruch 8 oder 9, bei dem das Gehäuse aus Aluminium gebildet ist.

11. Motor nach einem der Ansprüche 8 bis 10, bei dem die Kette (6) aus Stahl gebildet ist.

12. Gleitschiene für einen Steuertrieb (2) eines Motors, die dazu ausgebildet ist, sich in Abhängigkeit der Temperatur derart zu verformen, dass sie einer thermisch bedingten Toleranz in dem Steuertrieb (2) entgegenwirkt.

13. Gleitschiene nach Anspruch 12, die relativ zu dem Steuertrieb (2) fest zu montieren ist.

14. Gleitschiene nach Anspruch 12 oder 13, die aufgrund ihrer Geometrie, Materialeigenschaft und Wärmedehnung unter Temperatureinfluss derart selbstverformend ist, dass sie der thermisch bedingten Toleranz in dem Steuertrieb (2) entgegenwirkt.

15. Gleitschiene nach einem der Ansprüche 12 bis 14, die eine Gleitfläche (18) aufweist und über mindestens einen Befestigungspunkt (16) derart zu befestigen ist, dass eine Kette (6) des Steuertriebs (2) zwischen der Gleitfläche (18) und dem mindestens einen Befestigungspunkt (16) angeordnet ist, so dass die Kette (6) beaufschlagt durch die Gleitfläche (18) in Abhängigkeit der Temperatur zu spannen ist.

16. Gleitschiene nach einem der Ansprüche 12 bis 14, die derart zu befestigen ist, dass der mindestens eine Befestigungspunkt (16) auf einer konvexen Seite der Kette (6) angeordnet ist.

17. Gleitschiene nach Anspruch 15 oder 16, bei der die Gleitfläche (18) gewölbt ist.

18. Gleitschiene nach einem der Ansprüche 15 bis 17, die ein sich bei Temperaturzunahme ausdehnendes Teilstück (22) aufweist, das sich zwischen der Gleitfläche (18) und dem mindestens einen Befestigungspunkt (16) erstreckt.

19. Gleitschiene nach einem der Ansprüche 12 bis 18, die dazu ausgebildet ist, die Kette (6) um einen von der Temperatur (T) abhängige Verstellweg (s) auszulenken, wobei ein Wert für den Verstellweg (s) zumindest in einem bei Betrieb des Motors herrschenden Temperaturbereich bei größer werdender Temperatur (T) abnimmt und bei kleiner werdender Temperatur (T) zunimmt.

20. Gleitschiene nach einem der Ansprüche 12 bis 19, die zum Auslenken einer aus Stahl gebildeten Kette (6) ausgebildet ist.

21. Gleitschiene nach einem der Ansprüche 12 bis 20, die an einem Gehäuse des Motors zu befestigen ist, wobei der Motor eine Anzahl zumindest teilweise in dem Gehäuse angeordneter Wellen aufweist, und der Steuertrieb (2) eine Anzahl an den Wellen angeordneter Räder (4, 5) aufweist, wobei die Kette (6) mit diesen Rädern (4, 5) zusammenwirkt.
